# EUROPÄISCHE PATENTANMELDUNG

(11) **EP 1 767 841 A2**
(43) Veröffentlichungstag der Anmeldung: **28.03.2007**
(21) Anmeldenummer: 06019307.5
(22) Anmeldetag: 15.09.2006
(51) Int. Cl.: F16K 37/00, F16K 31/42, F23N 1/00

(54) **Gasbrenner für ein Heizgerät**

(30) Priorität: 23.09.2005 DE 102005045417
(71) Anmelder: ROBERT BOSCH GMBH, 70442 Stuttgart (DE)
(72) Erfinder: Vieira, Ricardo, 4520-605 S. Joaj de Jer (PT); Cardoso, Pedro, 3800 Aveiro (PT); Martins, Luis, 3830-749 Praia da Barra (PT)

(57) **Zusammenfassung**

Die Erfindung betrifft einen Gasbrenner für ein Heizgerät mit einer Brennersteuerung sowie einer Gasarmatur mit einem über eine Membran (4) gesteuerten Hauptgasventil (2), dessen Ventilachse (3) mit der Membran (4) verbunden ist, mit einem Gas-Einlass (5), einem Gas-Auslass (6) und mit zwei Steuerventilen (7, 8), welche in Abhängigkeit von der angeforderten Leistung einen Raum (9) hinter der Membran (4) mit Druck beaufschlagen,

Der Erfindung liegt die Aufgabe zugrunde, mit einfachen Maßnahmen die Leistung eines Gasbrenners an einem Heizgerät zu erfassen und zu regeln.

Erfindungsgemäß steht daher in der Gasarmatur die Ventilachse (3) des Hauptgasventils (2) mit einem Positionssensor (10) in Verbindung und die Leistung des Gasbrenners wird nach den Signalen dieses Positionssensors (10) geregelt.

## Beschreibung

Die Erfindung betrifft einen Gasbrenner für ein Heizgerät nach dem Oberbegriff des Patentanspruches 1.
Derartige Gasbrenner kommen insbesondere bei Heizgeräten zur Beheizung von Gebäuden und zur Warmwasserbereitung zum Einsatz. Sie besitzen eine Brennersteuerung zur Überwachung des Gasbrenners sowie zum Regeln nach dem aktuell erforderlichen Leistungsbedarf des Heizungssystems. Der Gasstrom wird mit einer Gasarmatur geregelt. Übliche Gasarmaturen besitzen einen Gas-Einlass sowie ein Hauptgasventil am Gas-Auslass, welches über eine Membran angesteuert wird. Dabei ist die Ventilachse des Hauptgasventils mit der Membran verbunden. Mit zwei Steuerventilen wird einen Raum hinter der Membran in Abhängigkeit von der angeforderten Leistung mit Druck beaufschlagt, so dass das Hauptgasventil über die Membran mit relativ geringen Kräften betätigt werden kann.
Bekannte Gasbrenner verwenden zur Leistungsregelung relativ umfangreiche Messeinrichtungen. Dazu gehört beispielsweise auch die Auswertung des lonisationsstromes mit einer lonisationselektrode im Bereich der Flamme. Nachteilig ist dabei allerdings der Kalibrieraufwand, insbesondere zum Ausgleich der Alterung der Elektrode und/oder zur Anpassung an veränderte Betriebsbedingungen. Außerdem sind relativ komplizierte elektronische Auswerteschaltungen für die gemessenen Signale erforderlich.

Der Erfindung liegt die Aufgabe zugrunde, mit einfachen Maßnahmen die Leistung eines Gasbrenners an einem Heizgerät zu erfassen und zu regeln.

Erfindungsgemäß wurde dies mit den Merkmalen des Patentanspruches 1 gelöst. Vorteilhafte Weiterbildungen sind den Unteransprüchen zu entnehmen.
Der Gasbrenner für ein Heizgerät ist dadurch gekennzeichnet, dass in der Gasarmatur die Ventilachse des Hauptgasventils mit einem Positionssensor in Verbindung steht und dass die Leistung des Gasbrenners nach den Signalen dieses Positionssensors geregelt wird.

Somit werden die zwei Steuerventile nach den Signalen des Positionssensors von der Brennersteuerung angesteuert. Vorzugsweise ist der Positionssensor in einem zugeordneten, verlängerten Endbereich der Ventilachse des Hauptgasventils angebracht und befindet sich außerhalb des mit Druck beaufschlagten Gehäuses der Gasarmatur.
Mit den erfindungsgemäßen Maßnahmen kann auf einfache Art und Weise die Leistung eines Gasbrenners an einem Heizgerät erfasst und entsprechend geregelt werden. Mit dem in die Gasarmatur integrierten Positionssensor für das Hauptgasventil wird die aktuelle Leistung des Gasbrenners indirekt über den Gasdurchfluss, insbesondere die Ventilposition, bestimmt. Das Messverfahren ist sehr sicher, einfach aufgebaut, robust und auch kostengünstig, weil keine Bauteile im Bereich der Flamme angeordnet werden müssen, wo Verschleiß- und Alterungserscheinungen auftreten. Auch können dafür einfache Komponenten, wie zum Beispiel Potentiometer, verwendet werden, um die Position der Ventilachse aufzunehmen. Dieses Messsignal ist proportional zum Gasdurchfluss durch das Hauptgasventil, vorausgesetzt der Eingangsdruck am Gas-Einlass ist konstant.

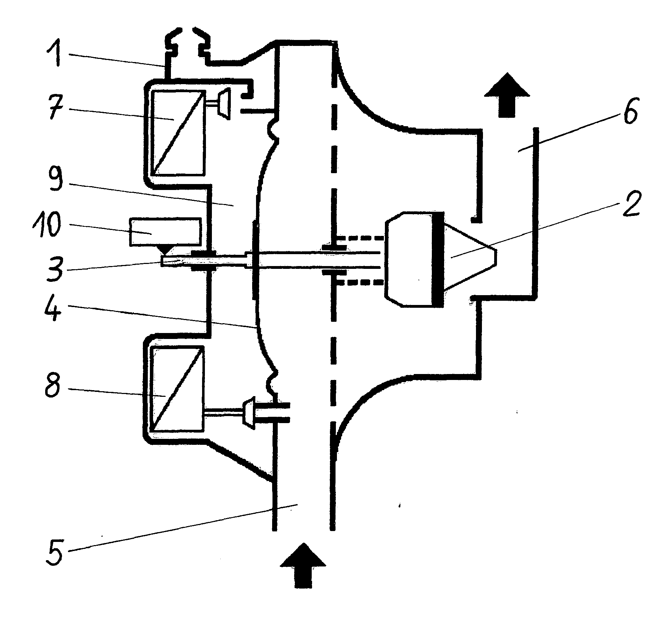

Die Zeichnung stellt ein Ausführungsbeispiel der Erfindung dar und zeigt in einer einzigen Figur einen Schnitt durch eine Gasarmatur für einen Gasbrenner.

Die Gasarmatur besteht im Wesentlichen aus einem Gehäuse 1 mit einem Hauptgasventil 2, dessen Ventilachse 3 mit einer Membran 4 verbunden ist, einem Gas-Einlass 5 sowie einem Gas-Auslass 6. Die Stellung des Hauptgasventils 2 wird mit zwei Steuerventilen 7, 8 geregelt. Diese beaufschlagen einen Raum 9 hinter der Membran 4 in Abhängigkeit von der angeforderten Leistung mit Druck.
Die Ventilachse 3 des Hauptgasventils 2 steht mit einem Positionssensor 10 in Verbindung. Es wird dadurch die Leistung des Gasbrenners geregelt, nämlich indem eine Brennersteuerung die Signale des Positionssensors 10 auswertet und die beiden Steuerventile 7, 8 ansteuert.

## Patentansprüche

1. Gasbrenner für ein Heizgerät mit einer Brennersteuerung sowie einer Gasarmatur mit einem über eine Membran (4) gesteuerten Hauptgasventil (2), dessen Ventilachse (3) mit der Membran (4) verbunden ist, mit einem Gas-Einlass (5), einem Gas-Auslass (6) und mit zwei Steuerventilen (7, 8), welche in Abhängigkeit von der angeforderten Leistung einen Raum (9) hinter der Membran (4) mit Druck beaufschlagen,
**dadurch gekennzeichnet, dass** in der Gasarmatur die Ventilachse (3) des Hauptgasventils (2) mit einem Positionssensor (10) in Verbindung steht und dass die Leistung des Gasbrenners nach den Signalen dieses Positionssensors (10) geregelt wird.

2. Gasbrenner nach Anspruch 1,
**dadurch gekennzeichnet, dass** die Brennersteuerung die zwei Steuerventile (7, 8) nach den Signalen des Positionssensors (10) ansteuert.

3. Gasbrenner nach den Ansprüchen 1 und 2,
**dadurch gekennzeichnet, dass** der Positionssensor (10) in einem zugeordneten, verlängerten Endbereich der Ventilachse (3) des Hauptgasventils (2) angebracht ist.

4. Gasbrenner nach den Ansprüchen 1 bis 3,
**dadurch gekennzeichnet, dass** der Positionssensor (10) außerhalb des mit Druck beaufschlagten Gehäuses (1) der Gasarmatur angeordnet ist.
